# EUROPEAN PATENT SPECIFICATION

(11) **EP 0 777 316 B1**
(45) Date of publication and mention of the grant of the patent: **03.07.2002**
(21) Application number: 96117807.6
(22) Date of filing: 07.11.1996
(51) Int. Cl.: H02K 49/04

(54) **Permanent magnet type eddy current reduction apparatus**
Wirbelstrombremse des Permanentmagnettyps
Ralentisseur à courant de Foucault du type à aimants permanents

(30) Priority: 30.11.1995 JP 33618095
(43) Date of publication of application: 04.06.1997
(73) Proprietor: ISUZU MOTORS LIMITED, Shinagawa-ku, Tokyo (JP)
(72) Inventor: Kuwahara, Tohru, c/o Isuzu Motors Ltd Kawasaki Fac, Kawasaki-shi, Kanagawa-ken (JP)
(74) Representative: Niedmers, Ole, Dipl.-Phys.

(56) References cited:
- EP-A- 0 415 308
- US-A- 2 827 856
- US-A- 3 263 107
- US-A- 5 064 029
- PATENT ABSTRACTS OF JAPAN vol. 016, no. 280 (E-1221), 23 June 1992 & JP 04 069046 A (ISUZU MOTORS LTD), 4 March 1992,
- PATENT ABSTRACTS OF JAPAN vol. 018, no. 155 (E-1524), 15 March 1994 & JP 05 328705 A (SAWAFUJI ELECTRIC CO LTD), 10 December 1993,
- PROCEEDINGS OF THE INSTITUTION OF ELECTRICAL ENGINEERS, vol. 119, no. 8, 8 August 1972, STEVENAGE GB, pages 1149-1154, XP002026717 D.A. BLOXHAM ET AL.: "Eddy-current coupling as an industrial variable-speed drive"

## Description

The present invention relates to a permanent magnet type eddy current reduction apparatus comprising a brake drum connected to a rotational shaft, an annular guide frame having an annular inner space of rectangular shape in section, secured its one end to a vehicle body and projected the other end into said brake drum, a portion of the guide frame, not facing to the inner peripheral portion of the brake drum of said guide frame, is formed of a ferromagnetic material, and a magnet support cylinder axially movably supported within said guide frame and fastening on the peripheral surface thereof a plurality of permanent magnets in a circumferentially spaced at the same pitch.

Such kind of permanent magnet type eddy current reduction apparatus is disclosed in the EP-A-0 415 308.

As shown in Japanese Patent Application Laid-Open No. 3(1991)-86,061 (Fig. 8), in the conventional permanent magnet type eddy current reduction apparatus, a magnet support cylinder is received into an annular guide frame constituting a part of a protective case, and when braking, the magnet support cylinder projects into the brake drum, and the permanent magnets form magnetic circuits between the magnets and the brake drum through ferromagnetic pole pieces of the guide frame. When the rotating brake drum traverses magnetic fields, eddy currents are generated in the brake drum to generate a braking force in a direction reversed to the rotational direction of the brake drum.

However, in the conventional eddy current reduction apparatus, since the magnetic flux passes through the thick ferromagnetic pole piece, there is a problem in that the magnetic flux arriving at the brake drum reduces and the braking force lowers. The braking force greatly lowers as the material for the brake drum has a large electric conductivity. Further, in the conventional eddy current reduction apparatus, the ferromagnetic pole pieces are connected to the guide frame. Therefore, the construction becomes complex, the manufacturing cost is high and the weight increases.

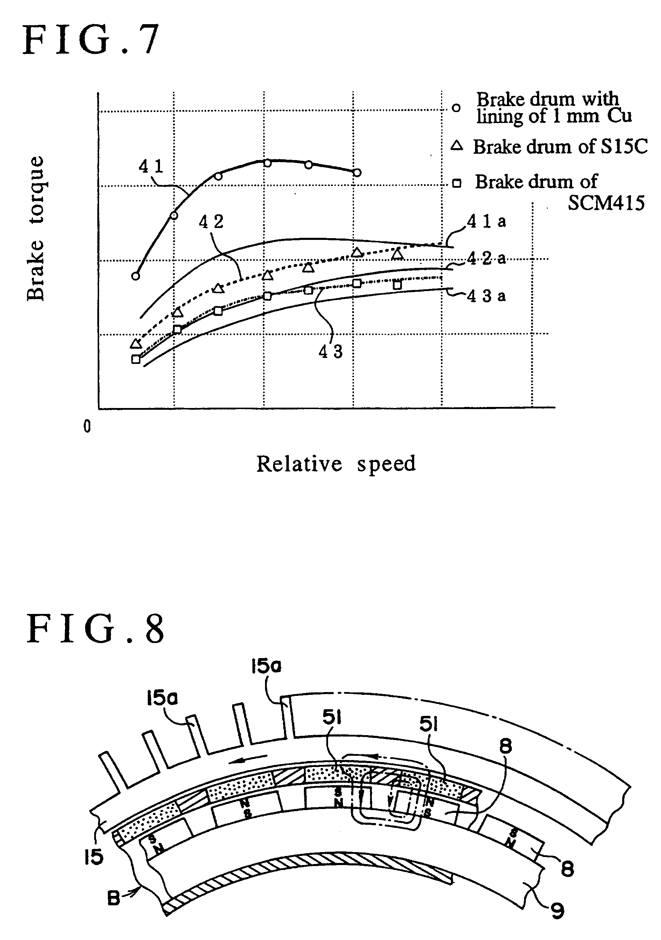

As shown in Fig. 8, when a brake drum 15 rotates, most of magnetic flux is drawn in a rotational direction of the brake drum 15 but a part of magnetic flux does not enter the brake drum 15. Therefore, the magnetic flux directly enters a ferromagnetic pole piece 51 adjacent thereto or flows into a different pole of a magnet 8.

In view of the foregoing, the object of the present invention is to provide a permanent magnet type eddy current reduction apparatus in which a guide frame is provided with a cylindrical portion facing to an inner peripheral surface of a brake drum, the cylindrical portion being formed from a thin plate of a nonmagnetic material so as to miniaturize and reduce the weight of the apparatus and increase a braking ability.

The object will be solved by a cylindrical portion of the guide frame, facing to the inner peripheral portion of the brake drum of said guide frame, is formed from a thin plate having a thickness of 0.4 to 0.8 mm, formed of a nonmagnetic material to place the permanent magnets close to the inner peripheral surface of the brake drum.

In a cylindrical portion of a guide frame facing to an inner peripheral surface of a brake drum, a thin plate formed of a nonmagnetic material (such as austenite based stainless steel, aluminium, heat resistant synthetic resin, strengthened fibercontained carbon, etc.) is disposed continuously over the entire periphery without provision of ferromagnetic pole pieces to form a sealed construction for protecting permanent magnets. For the thin plate, for example, an aluminium plate having 0.5 to 0.8 mm of thickness is used to thereby prevent foreign matter from being adhered on the magnets accommodated in the guide frame and prevent the magnets from being damaged or corroded due to the foreign matter or water, and to make the guide frame smaller in size and lighter in weight.

According to the present invention, the ferromagnetic pole pieces are removed, the thin nonmagnetic cylindrical body is disposed on the cylindrical portion of the guide frame facing to the brake drum, and the magnets are placed close to the inner peripheral surface of the brake drum, whereby the magnetic field of the magnets exerting on the brake drum becomes intense, the large braking force is obtained, and it is possible to miniaturize the guide frame and reduce the weight thereof and reduce the manufacturing cost thereof.

### BRIEF DESCRIPTION OF THE DRAWINGS

These and other objects and features of the invention will become more apparent upon a perusal of the following description taken in conjunction with the accompanying drawings wherein:
Fig. 1 is a side sectional view showing main parts of a permanent magnet type eddy current reduction apparatus according to the present invention.
Fig. 2 is a side sectional view showing main parts of a permanent magnet type eddy current reduction apparatus according to a partly modified embodiment according to the present invention.
Fig. 3 is a front sectional view showing main parts of a permanent magnet type eddy current reduction apparatus taken on line 3A-3A of Fig. 1.
Fig. 4 is a front sectional view showing main parts of a permanent magnet type eddy current reduction apparatus according to another modified embodiment of the present invention.
Fig. 5 is a front sectional view showing main parts of a permanent magnet type eddy current reduction apparatus according to another modified embodiment of the present invention.
Fig. 6 is a side sectional view showing main parts of a permanent magnet type eddy current reduction apparatus according to another modified embodiment of the present invention.
Fig. 7 is a diagram representative of braking characteristics of a permanent magnet type eddy current reduction apparatus according to the present invention and prior art.
Fig. 8 is a front sectional view showing main parts of a conventional permanent magnet type eddy current reduction apparatus.

### DESCRIPTION OF THE PREFERRED EMBODIMENTS

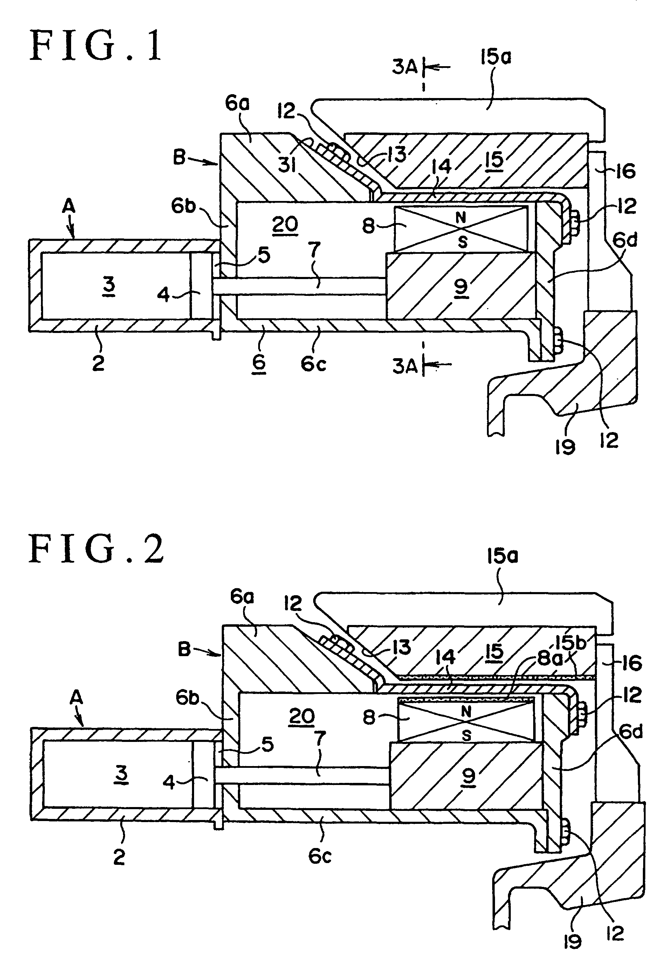

As shown in Fig. 1, in the eddy current reduction apparatus, for example, a brake drum 15 provided with a cooling fin 15a is connected its right end by welding or the like to a number of spokes 16 radially extending from a disk-like mounting flange 19 which is connected to an output shaft of a vehicular transmission or speed change gear. A left end of the brake drum 15 is formed with a conical surface 13 so that heat within the brake drum 15 is smoothly diffused outside.

An annular guide frame B secured to the wall, for example, the wall of the speed change gear has an inner space 20 having a rectangular shape in section with the right half thereof extended into the brake drum 15 leaving a slight clearance. More specifically, the guide frame B is composed of a frame body 6 in the form of a C-shape in section formed of a ferromagnetic material such as iron, and a thin cylindrical body 14 facing to the inner peripheral surface of the brake drum 15 and formed of a nonmagnetic material. The frame body 6 is integrally provided with an end wall or annular cover plate 6b, an outer cylindrical portion 6a having substantially the same wall-thickness as the brake drum 15, and an inner cylindrical portion 6c, the cover plate 6b being connected to the right end of the frame body 6 by means of a plurality of bolts 12. The outer cylindrical portion 6a is formed at the right end thereof with a conical surface 31 facing to the conical surface 13 of the brake drum 15.

According to the present invention, a cylindrical body 14 formed of a nonmagnetic thin plate having 0.4 to 0.8 mm of thickness such as austenite based stainless steel, aluminum, heat resistant synthetic resin, fiber reinforced carbon material, etc. is disposed on a portion facing to the inner peripheral surface of the brake drum 15 and connected to the conical surface 31 of the outer cylindrical portion 6a and the outer peripheral edge of the cover plate 6d by means of a plurality of bolts 12 in order to make the guide frame sealed construction. The cylindrical body 14 is formed at the left end thereof with a conical portion placed upon the conical surface 31 and is formed at the right end thereof with a diametrally inwardly projecting annular plate portion placed upon the outer peripheral edge of the cover plate 6d.

A magnet support cylinder 9 having substantially the same wall-thickness as the brake drum 15 is accommodated in the guide frame B. The magnet support cylinder 9 is formed of a ferromagnetic material such as iron and is axially slidably fitted over the inner cylindrical portion 6c. A plurality of permanent magnets 8 are fastened to the outer peripheral surface of the magnet support cylinder 9 at a circumferentially spaced apart positions of uniform pitch. The magnet 8 is provided with magnetic poles on the outer peripheral surface facing to the inner peripheral surface of the brake drum 15 and the inner peripheral surface fastened to the magnet support cylinder 9, the polarities of the permanent magnets facing to the inner peripheral surface of the brake drum 15 being alternating circumferentially.

A cylinder 2 for a plurality of, preferably three, actuators A is connected to the cover plate 6b in order to drive the magnet support cylinder 9 between a brake position where the magnet support cylinder 9 is projected into the brake drum 15, shown in Fig. 1, and a non-brake position where the magnet support cylinder 9 is withdrawn from the brake drum 15 in contact with the cover plate 6b. The actuator A is defined a pair of chambers 3 and 5 by inserting a piston 4 into the cylinder 2, and the magnet support cylinder 9 is connected to a rod 7 projected toward an annular inner space 20 of the guide frame B through the cover plate 6b from the piston 4.

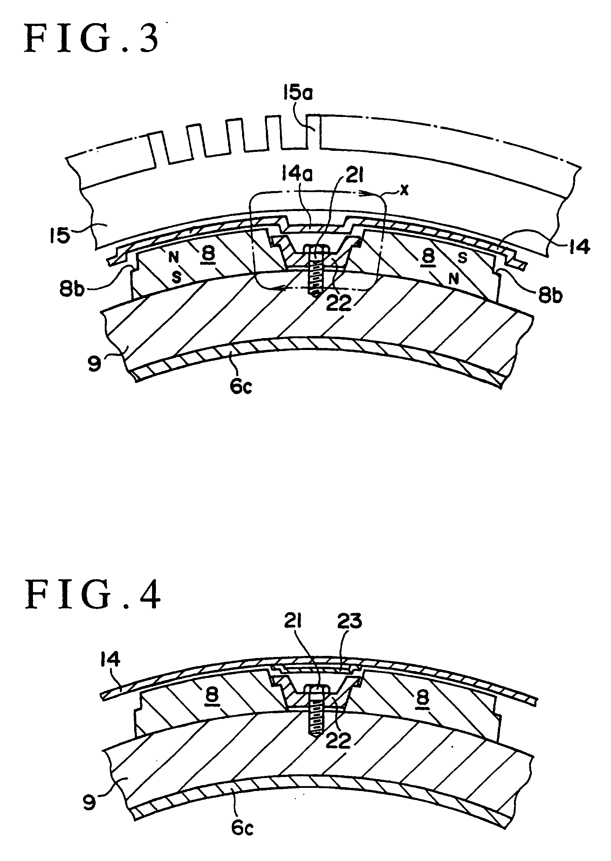

As shown in Fig. 2, preferably, a thin heat insulating plate 8a is connected to the outer peripheral surface of each magnet 8 in order to protect the magnets 8 from heat generated during braking. The brake drum 15 is formed of iron or the like but when the brake drum 15 is provided on the inner peripheral surface with a thin coating 15b formed of an electric good conductor such as copper, the braking force can be enhanced. As shown in Fig. 3, each magnet 8 is in the form of a block and secured to the magnet support cylinder 9 by means of a pair of fixtures 22 in the form of U-shape in section and bolts 21. The fixture 22 is placed upon shoulders 8b on end of a pair of magnets 8 arranged in a peripheral direction and fastened to the magnet support cylinder 9 by means of a plurality of bolts 21, the shoulders 8b being formed on opposite peripheral ends of each magnet 8.

The cylindrical body 14, of the guide frame B, facing to the inner peripheral surface of the brake drum 15 is formed of a nonmagnetic material such as austenite based stainless steel, aluminum, heat resistant synthetic resin or carbon strengthened by carbon fibers, etc. Preferably, the cylindrical body 14 is formed with a plurality of grooves 14a. Each groove 14a projects into a space between the magnets 8 adjacent to each other and extends in an axial direction by stamping or the like in order to enhance the rigid strength.

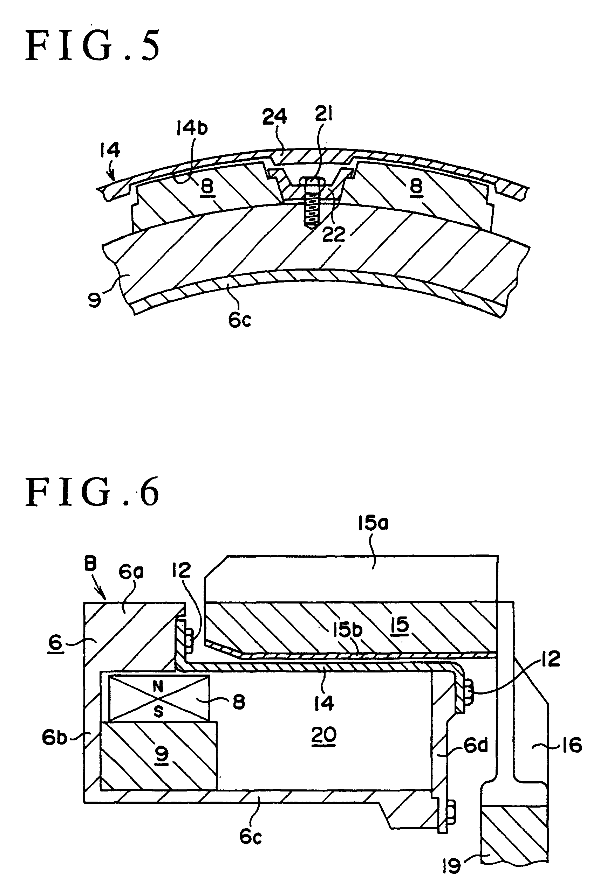

As shown in Fig. 4, a reinforcing plate 23 having a U-shape in section projecting into the space between the magnets 8 adjacent to each other may be connected to the inner peripheral surface of the cylindrical body 14 by welding or the like. In the embodiment shown in Fig. 5, in the case where the cylindrical body 14 is cast or molded of resin, axial grooves 14b are formed in the inner peripheral surface of the cylindrical body 14 to increase a wall-thickness on a portion 24 facing to the space between a pair of magnets 8 adjacent to each other.

The operation of the eddy current reduction apparatus according to the present invention will be described hereinafter. When braking, the magnet support cylinder 9 is pushed by the actuator A toward the position at which the magnets 8 oppose to the inner peripheral surface of the brake drum 15. At this time, the magnets 8 exert the magnetic field on the brake drum 15 via the thin cylindrical body 14 to form a magnetic circuit x between the brake drum 15 and the magnet support cylinder 9, as shown in Fig. 3. When the rotating brake drum 15 traverses the magnetic field, eddy current flow in (wall portion of) the brake drum 15 to generate a braking torque.

When braking is released, a pressure fluid is supplied to the chamber 5 of the actuator A, and a pressure fluid of the chamber 3 is discharged outside, the magnet support cylinder 9 is pulled leftward by the piston 4 till it contacts the cover plate 6b. The magnets 8 are withdrawn from the interior of the brake drum 15 to form a magnetic circuit between the outer cylindrical portion 6a of the guide frame B and the magnet support cylinder 9, and no magnetic field exerts on the brake drum 15.

According to the present invention, the ferromagnetic pole pieces for protecting the magnets 8 and inducing the magnetic field is removed, and the cylindrical body 14 formed from a thin plate of aluminum is disposed on the portion, of the guide frame B, facing to the inner peripheral surface of the brake drum 15. Therefore, the magnets 8 are considerably placed close to the inner peripheral surface of the brake drum 15 as compared with prior art whereby an intenser magnetic field exerts on the brake drum 15 so that a strong braking force is obtained. In other words, even if the radius of the brake drum 15 is reduced by a thickness of the conventional ferromagnetic pole pieces, a sufficient braking force is obtained to enable mounting of the eddy current reduction apparatus on a small vehicle.

As shown in Fig. 6, even if the axial dimension of the magnet support cylinder 9 including the magnets 8 is considerably shortened relative to the brake drum 15 having the conventional dimension, the braking force equal to that of prior art is to be obtained. There produces a room in the inner space 20 of the guide frame B, and the cooling performance relative to the heat generated during braking is enhanced. Further, in order to relieve a rise in temperature within the frame body 6, a breezer may be provided at a portion into which water or dust is hard to enter (for example, the inner cylindrical portion 6c of the frame body) to prevent a rise in internal pressure.

Lines 41 to 43 in Fig. 7 indicate the results of the braking test of the eddy current reduction apparatus provided with the guide frame B according to the present invention which is different in material from but the same dimension as that of the brake drum 15, and lines 41a to 43a indicate the results of the braking test of the eddy current reduction apparatus provided with the same brake drum 15 and the guide frame having the conventional ferromagnetic pole pieces. Lines 41, 41a, lines 42, 42a and lines 43, 43a represent the relation between the relative speed of the magnet 8 and the brake drum 15 and the braking torque generated, with respect to the inner surface of the brake drum provided with a copper coating having 1 mm of thickness, material for the brake drum 15 being Sl5C, and material for the brake drum 15 being SCM415, respectively.

According to the present invention, as will be apparent from Fig. 7, it is understood that the ferromagnetic pole pieces are removed, the thin nonmagnetic cylindrical body is disposed on the portion, of the guide frame B, facing to the brake drum 15 and the magnets 8 are placed close to the inner peripheral surface of the brake drum 15 whereby the magnetic field exerted by the magnets 8 on the brake drum 15 becomes intense, and the large braking force is obtained. Particularly, the brake drum 15 is provided in the inner peripheral surface with the coating 15b formed of an electric good conductor whereby the braking force is considerably enhanced. With the trend of the magnetic circuit formed by the magnets 8 between the magnet support cylinder 9 and the brake drum 15 close to the inner peripheral surface of the brake drum 15 and the outer peripheral surface of the magnet support cylinder 9 (shortening of the channel length of the magnetic circuit), the coating 15b assists a flow of the eddy current, as a result of which a large braking force is generated.

Modifications are possible within the scope of the amended claims.

### DESCRIPTION OF REFERENCE NUMERALS

- A:: actuator
- B:: annular guide frame
- 2:: cylinder
- 3:: chamber
- 4:: piston
- 5:: chamber
- 6:: frame body
- 6a:: outer cylindrical portion
- 6b:: cover plate
- 6c:: inner cylindrical portion
- 6d:: cover plate
- 7:: rod
- 8:: permanent magnet
- 8a:: heat insulating plate
- 8b:: shoulder
- 9:: magnet support cylinder
- 12:: bolt
- 13:: conical surface
- 14:: cylindrical body
- 14a:: axial groove
- 14b:: axial groove
- 15:: brake drum
- 15a:: cooling fin
- 15b:: coating
- 16:: spoke
- 19:: flange
- 20:: inner space
- 21:: bolt
- 22:: fixture
- 23:: reinforcing plate
- 24:: thick portion
- 31:: conical surface
- 41:: line
- 41a:: line
- 42:: line
- 42a:: line
- 43:: line
- 43a:: line
- 51:: pole piece

## Claims

1. A permanent magnet type eddy current reduction apparatus comprising a brake drum (15) connected to a rotational shaft, an annular guide frame (B) having an annular inner space (20) of rectangular shape in section, secured its one end to a vehicle body and projected the other end into said brake drum (15), a portion of the guide frame (B), not facing to the inner peripheral portion of the brake drum (15) of said guide frame (B), is formed of a ferromagnetic material, and a magnet support cylinder (9) axially movably supported within said guide frame (B) and fastening on the peripheral surface thereof a plurality of permanent magnets (8) in a circumferentially spaced at the same pitch, **characterized in that** a cylindrical portion of the guide frame (B), facing to the inner peripheral portion of the brake drum (15) of said guide frame (B), is formed from a thin plate having a thickness of 0.4 to 0.8 mm, formed of a nonmagnetic material to place the permanent magnets (8) close to the inner peripheral surface of the brake drum (15).

2. The permanent magnet type eddy current reduction apparatus according to claim 1, wherein a thin heat insulating plate (8a) is connected to the outer peripheral surface of said permanent magnet (8).

3. The permanent magnet type eddy current reduction apparatus according to claim 1, wherein said brake drum (15) is provided in the inner peripheral surface thereof with a coating (15b) formed of an electric good conductor.

## Patentansprüche

1. Wirbelstrombremse des Permanentmagnettyps, umfassend eine Bremstrommel (15), die an eine Drehwelle angeschlossen ist, einen ringförmigen Führungsrahmen (B), der einen ringförmigen Innenraum (20) von rechteckiger Form im Querschnitt aufweist, dessen eines Ende an einem Fahrzeugkörper befestigt ist und dessen anderes Ende in die Bremstrommel (15) hineinragt, wobei ein Teil des Führungsrahmens (B), der nicht dem inneren Umfangsabschnitt der Bremstrommel (15) des Führungsrahmens (B) gegenüber angeordnet ist, aus einem ferromagnetischen Material hergestellt ist, und einen Magnettragzylinder (9), der innerhalb des Führungsrahmens (B) axial beweglich gestützt wird und auf der Umfangsfläche eine Vielzahl von Permanentmagneten (8) in einem Umfangsraum in der selben Teilung befestigt, **dadurch gekennzeichnet, daß** ein zylindrischer Abschnitt des Führungsrahmens (B), der dem inneren Abschnitt der Bremstrommel (15) des Führungsrahmens (B) gegenüber angeordnet ist, aus einem Feinblech hergestellt ist, das eine Dicke von 0,4 bis 0,8 mm aufweist, das aus einem nichtmagnetischen Material hergestellt ist, um die Permanentmagneten (8) nahe an der inneren Umfangsfläche der Bremstrommel (15) anzuordnen.

2. Wirbelstrombremse des Permanentmagnettyps nach Anspruch 1, **dadurch gekennzeichnet, daß** ein wärmeisolierendes Feinblech (8a) mit der äußeren Oberfläche der Permanentmagneten (8) verbunden ist.

3. Wirbelstrombremse des Permanentmagnettyps nach Anspruch 1, **dadurch gekennzeichnet, daß** die Bremstrommel (15) mit einem Überzug (15b), der aus einem guten, elektrischen Leiter hergestellt ist, auf der inneren Umfangsfläche versehen ist.

## Revendications

1. Ralentisseur à courant de Foucault de type à aimant permanent comprenant un tambour de frein (15) relié à un axe rotatif, un châssis de guidage annulaire (B) comportant un espace interne annulaire (20) de section à forme rectangulaire, fixé par une extrémité à un corps de véhicule et faisant saillie par son autre extrémité dans le tambour de frein (15), une partie du châssis de guidage (B), non tournée vers la partie périphérique interne du tambour de frein (15) du châssis de guidage (B), étant formée par un matériau ferromagnétique, et un cylindre support d'aimant (9) mobile axialement supporté dans le châssis de guidage (B) et fixant sur la périphérie de celui-ci une pluralité d'aimants permanents (8) selon un espacement circonférentiel à pas constant, **caractérisé par le fait qu'**une partie cylindrique du châssis de guidage (B), tournée vers la partie périphérique interne du tambour de frein (15) du châssis de guidage (B), est formée à partir d'une mince plaque de 0,4 et 0,8 mm d'épaisseur, formée d'un matériau non magnétique pour placer les aimants permanents (8) près de la surface périphérique interne du tambour de frein (15).

2. Ralentisseur à courant de Foucault de type à aimant permanent selon la revendication 1, dans lequel une fine plaque thermiquement isolante (8a) est reliée à la surface périphérique externe de l'aimant permanent (8).

3. Ralentisseur à courant de Foucault de type à aimant permanent selon la revendication 1, dans lequel le tambour de frein (15) comporte, dans sa surface périphérique interne, un revêtement (15b) formé d'un bon conducteur électrique.
